# EUROPEAN PATENT SPECIFICATION

(11) **EP 3 873 220 B1**
(45) Date of publication and mention of the grant of the patent: **06.08.2025**
(21) Application number: 19795018.1
(22) Date of filing: 31.10.2019
(51) Int. Cl.: A23C 20/02

(54) **NON-DAIRY CHEESE COMPOSITION AND PROCESS FOR PREPARATION THEREOF**
MILCHFREIES KÄSEANALOG UND VERFAHREN ZUR HERSTELLUNG DAVON
ANALOGUE DE FROMAGE NON LAITIER ET SON PROCÉDÉ DE PRÉPARATION

(30) Priority: 01.11.2018 EP 18203968; 02.10.2019 EP 19201146
(43) Date of publication of application: 08.09.2021
(73) Proprietor: Société des Produits Nestlé S.A., 1800 Vevey (CH)
(72) Inventor: RAY, Joydeep, 1066 Epalinges (CH); FERNANDEZ FARRES, Isabel, 1012 Lausanne (CH)
(74) Representative: Slaven, John William
(86) International application number: PCT/EP2019/079810
(87) International publication number: WO 2020/089385

(56) References cited:
- US-A- 5 807 601
- US-A1- 2010 196 575
- US-A1- 2013 287 928
- SOLOWIEJ BARTOSZ ET AL: "The effect of pH and modified maize starches on texture, rheological properties and meltability of acid casein processed cheese analogues", EUROPEAN FOOD RESEARCH AND TECHNOLOGY, SPRINGER BERLIN HEIDELBERG, BERLIN/HEIDELBERG, vol. 242, no. 9, 23 February 2016 (2016-02-23), pages 1577 - 1585, XP036020238, ISSN: 1438-2377, [retrieved on 20160223], DOI: 10.1007/S00217-016-2658-4

## Description

### Background of the invention

There has been an increasing trend in the consumption of dairy-free products. The single largest factor driving consumers to choose dairy-free is a shift in perception by millennials who believe dairy-free is better for them. Their perception of health and sustainability (including animal welfare and environmental footprint) are core motivators for their choice to limit dairy consumption. Such a shift in choosing dairy-free has extended from milk to include other products such a cheese. Currently, all commercially available vegan cheeses utilize a range of additives (thickeners, gelling agents, stabilizers and emulsifiers). Using these additives, especially those which are chemically modified, is not perceived by today's consumer as being a "natural food product". Cheese like products based on nuts, even if combined with gelling agents, do not exhibit a texture/rheological response to match that of cheese, specifically springiness or "stretchability" on baking. Some commercial non-dairy cheese products currently on the market are based on soy and typically containing casein, a dairy protein, and hence not suitable for vegan consumers. In addition, soy contains some allergens (such as lectins) and therefore not adequate for those consumers sensitive to such molecules. Due to all those deficiencies, there is nowadays no non-dairy cheese that is acceptable for consumers in terms of optimal textural attributes and friendly, natural ingredient list.

US 5,807,601 discloses a cheese analogue comprising hydrocolloids for use as a stabilizer. US 20080000105 discloses a method for producing non-dairy cottage cheese using 1 wt% of hydrocolloids (k-carrageenan, guar gum). US 20100196575 describes substitute cheese based on vegetable protein, vegetable oil and a hydrocolloid. US 20170020156 discloses a cheese analogue, which comprise a powder blend comprising at least one vegetable protein, at least one flour and at least one hydrocolloid. US 20130295265 discloses a cheese extender comprising starch, whey, emulsifiers and 0-8 wt% gums (xanthan, locus bean gum, guar gum).

In addition to the prior art above, there are also vegan cheeses in the market which are not considered not natural due to the presence of additives such as modified starches and/or hydrocolloids.

In the light of the above, there is a clear need for a non-dairy, cheese composition with desirable textural properties and a short and consumer friendly label.

### Summary of invention

The invention relates to a non-dairy cheese composition. Such a composition would serve as an alternative to dairy products for human consumption.

An aspect of the present invention relates to a non-dairy cheese composition comprising a a combination of 2 or more different dietary fibers; non-animal protein, calcium salt, and lipid, wherein the composition is devoid of hydrocolloids and modified starches, and wherein the composition has a moisture content of more than 45 wt% and less than 60 wt%, and wherein one of the dietary fibers is pea cell wall fiber and the other dietary fiber is potato fiber.

Another aspect of the present invention relates to a method of preparing a non-dairy cheese composition comprising the steps of:
(i) Mixing two or more different dietary fibers, calcium salt, and non-animal protein at room temperature;
(ii) Adding water under shear until homogenous mixture is reached;
(iii) Adding lipids to the above mixture and emulsifying under high shear;
(iv) Heating the emulsion to a temperature ranging from 65°C to 80°C, until desired smooth, homogeneous texture is achieved.
(v) Optionally molding the emulsion obtained in step (iv) to required shape; and
(vi) Cooling down

### Brief description of figures

Figure 1 represents strain sweeps for 5 wt. % potato fiber water dispersions, measured at constant Frequency of 1 Hz.
Figure 2 represents apparent viscosity (Pa.s) of Pea Cell Wall fiber water dispersions as a function of shear rate (s⁻¹) at a range of concentrations.

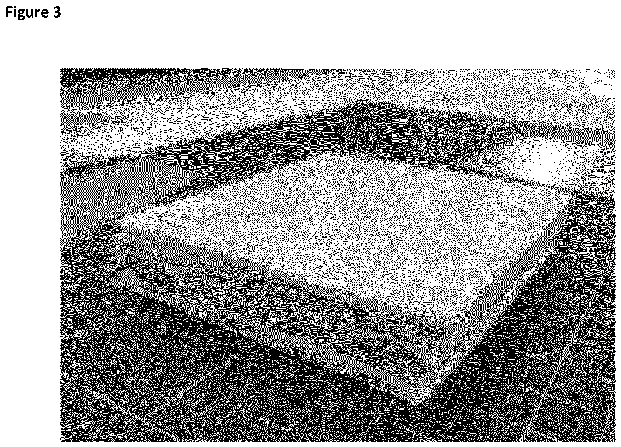

Figure 3 shows sliced non-dairy cheese (Recipe C).

### Detailed description of the invention

The compositions disclosed herein may lack any element that is not specifically disclosed herein. Thus, a disclosure of an embodiment using the term "comprising" includes a disclosure of embodiments "consisting essentially of" and "consisting of" and "containing" the components identified. Similarly, the methods disclosed herein may lack any step that is not specifically disclosed herein. Thus, a disclosure of an embodiment using the term "comprising" includes a disclosure of embodiments "consisting essentially of" and "consisting of" and "containing" the steps identified. Any embodiment disclosed herein can be combined with any other embodiment disclosed herein unless explicitly and directly stated otherwise.

Unless defined otherwise, all technical and scientific terms and any acronyms used herein have the same meanings as commonly understood by one of ordinary skill in the art in the field of the invention. Although any compositions, methods, articles of manufacture, or other means or materials similar or equivalent to those described herein can be used in the practice of the present invention, the preferred compositions, methods, articles of manufacture, or other means or materials are described herein.

As used herein, "about" is understood to refer to numbers in a range of numerals, for example the range of -30% to +30% of the referenced number, or -20% to +20% of the referenced number, or -10% to +10% of the referenced number, or -5% to +5% of the referenced number, or -1% to +1% of the referenced number. All numerical ranges herein should be understood to include all integers, whole or fractions, within the range. Moreover, these numerical ranges should be construed as providing support for a claim directed to any number or subset of numbers in that range.

The term "wt%" or "wt. %" or "% wt." used in the entire description refers to total weight % of the final product. The recipes in the examples show an illustration of how wt % or wt. % or % wt. is to be understood by the skilled person in the art.

The term "high shear" as used herein means the use of shear at least 2000 rpm.

The term "non-dairy cheese" refer to replacements or analogues of dairy cheese. They are devoid of animal products such as milk. The term includes vegan cheeses intended to be used for salad bars and baked cheese food products such as pizzas and pasta.

The term "devoid of additives" refers to compositions not comprising modified starches, hydrocolloids (e.g. carraregenans, xanthan gum, gellan gum, locust bean gum, alginates, guar gum, karaya gum, gum Arabic, konjac gum, agar agar, gelatin); emulsifiers (e.g. lecithin, mono and diglycerides, Polyglycerol polyricinoleate (PGPR)); whitening agents (e.g. titanium dioxide); plasticizers (e.g. glycerine); anti-caking agents (e.g. silicon-dioxide).

The term "dietary fiber" relates to a plant-based ingredient that is not completely digestible by enzymes in the human gut system. The term comprises plant based fiber-rich fractions that are not chemically modified and are obtained from vegetables, seeds, fruits, nuts, or pulses. The dietary fiber may comprise cellulose, hemicellulose, pectin, β-glucans, mucilages and lignin.

In one embodiment, potato fiber at 5 wt% in aqueous solution at 20°C may exhibit one or both of the following viscoelastic properties:
- shear thinning behavior with zero shear rate viscosity above 8 Pa.s;
- G' (storage modulus) greater than 65 Pa and G" (loss modulus) lower than 25Pa of at 1Hz frequency.

Within the scope of this invention, shear thinning is defined as any material that exhibits a decrease in viscosity with increasing shear rate or applied stress.

The term "non-animal protein" may include "plant protein", "plant protein isolates" or "plant protein concentrates" or combination thereof and refers to any protein source from microorganisms such as yeast (for example, nutritional yeast), and algae, vegetables, seeds, nuts, algae, pulses.

The term "plant protein concentrate" as used herein is a plant material having a protein content of from about 65 wt% to less than about 90 wt% plant protein. Plant protein concentrate also contains plant fiber, typically from about 3.5 wt% up to about 20 wt%.

The term "plant protein isolate" as used herein is a plant material having a protein content of at least about 80 wt% plant protein on a moisture free basis.

Plant protein can include plant protein concentrate or plant protein isolate from pea protein, corn protein (e.g., ground corn or corn gluten), wheat protein (e.g., ground wheat or wheat gluten such as vital wheat gluten), potato protein, rice protein (e.g., ground rice or rice gluten), barley protein, algae protein, canola protein or combinations thereof.

The term "lipid" refers to oil, fat and combinations of oil and fat in particular triglycerides. The term "lipid" also comprises oils obtained from vegetables, seeds, nuts and algae. In a preferred embodiment the oil is selected from the group consisting of coconut oil, sunflower oil, rapeseed oil, canola oil, cotton seed oil, peanut oil, olive oil, moringa oil, algal oil, safflower oil, corn oil, rice bran oil, sesame oil, hazelnut oil, avocado oil, almond oil, walnut oil or a combination thereof including the high oleic versions of the oils stated above. In one embodiment the lipid is a high oleic vegetable oil comprising monounsaturated fatty acid of at least 65 wt% and polyunsaturated fatty acid below 10 wt% and displays below 5 wt% of solid fat content at 0°C, wherein, the unsaturated fatty acid contains 18C-atoms or more than 18C-atoms. The term lipid may also refer to solid fats with saturated fatty acid content greater than 20 wt%, for example stearin fractions and mid-fractions of palm (both fruit and Kernel), shea, cocoa, coconut, cottonseed, moringa and algae. The solid fat may be shea stearin fraction.

The term "calcium salts" refers to salts of calcium such as calcium carbonate, calcium chloride, calcium gluconate, calcium lactate, calcium phosphate, calcium glycerophosphate and the like, and mixtures thereof. In one embodiment the calcium is a calcium phosphate salt. The amount of calcium typically ranges from 0.5 to 5 wt%.

The invention relates in general to a non-dairy cheese composition comprising dietary fiber, protein, and lipid.

In a further aspect, the invention relates to a non-dairy cheese composition comprising dietary fiber, non-animal protein, and lipid, and wherein the composition has a moisture content of more than 45 wt% and less than 60 wt%.

In one embodiment, the non-animal protein is derived from nutritional yeast.

In one embodiment, the composition is devoid of modified starches.

In one embodiment, the composition is devoid of hydrocolloids.

In one embodiment, the composition is devoid of emulsifiers.

In one embodiment, the composition is devoid of whitening agents.

In one embodiment, the composition has a moisture content of 46 to 59 wt%.

In a further aspect, the invention relates to a non-dairy cheese composition comprising dietary fiber, non-animal protein, and lipid, wherein the composition is devoid of hydrocolloids and modified starches, and wherein the composition has a moisture content of more than 45 wt% and less than 60 wt%.

In a further aspect, the invention relates to a non-dairy cheese composition comprising dietary fiber, non-animal protein, and lipid, wherein the composition is devoid of hydrocolloids, gums, emulsifiers, and modified starches, and wherein the composition has a moisture content of more than 45 wt% and less than 60 wt%.

In one embodiment, the dietary fiber is a combination of two or more different dietary fibers.

The invention relates to a non-dairy cheese composition comprising two or more different dietary fibers; non-animal protein, and lipid, wherein the composition is devoid of additives, and wherein the composition has a moisture content of more than 45 wt% and less than 60 wt% according to claim 1.

In one embodiment, the composition has a moisture content of between 50 - 59 wt%, preferably 54 - 58 wt%.

In one embodiment, the composition further comprises non-dairy cheese flavor, spices, herbs, dried vegetable, fruit, flavoring salts and sugars.

In one embodiment, the dietary fibre concentration of the composition is at least 10 wt%.

In one embodiment, the dietary fibre concentration of the composition is between 10 to 30 wt%. In one embodiment, one of the dietary fibres of the combination comprises a starch content of greater than 20 wt%, preferably greater than 30 wt%, preferably between 35 to 40 wt%.

In one embodiment, one of the dietary fibers of the combination comprises a soluble polysaccharide fraction between 10 to 60 wt%, or 20 to 60 wt%, or 35 to 60 wt%, or 50 to 60 wt% of the total dietary fiber.

In one embodiment, one of the dietary fibers is potato fiber.

In one embodiment, the potato fiber is present at a concentration of between 0.5 to 15 wt%, or between 1 to 10 wt%, or between 4 to 9 wt %, or at about 6 wt%, or at about 7.55 wt%, or at about 8.5 wt%.

In one embodiment, the potato fiber displays a Newtonian fluid behavior at concentrations below 1% wt. In one embodiment, the potato fiber displays a shear thinning response at concentrations equal or above 1% wt.

In one embodiment, the potato fiber at 5 wt% in aqueous solution at 20°C exhibits the following viscoelastic properties 1) shear thinning behavior with zero shear rate viscosity above 8 Pa.s; and 2) G' (storage modulus) greater than 65 Pa and G" (loss modulus) lower than 25Pa of at 1Hz frequency.

In one embodiment, one of the dietary fibers is from a pea source. In one embodiment, the dietary fiber from the pea source, preferably pea cell wall fiber, preferably micronized pea cell wall fiber, is present in the composition at a concentration of between 1 to 10 wt%, or between 2 to 8 wt %, or at about 3 wt%, or at about 4 wt%, or at about 5 wt%, or at about 6 wt%.

In one embodiment, the dietary fiber from the pea source is not pea hull fiber.

In one embodiment, the total starch content of pea cell wall fiber is at least 20 wt%, more preferably at least 25 wt%, more preferably at least 30 wt%, more preferably at least 35 wt%, more preferably between 35 to 40 wt%, more preferably about 38 wt% total starch content.

In one embodiment, the dietary fiber comprises a combination of potato fiber and pea cell wall fiber. In one embodiment, the potato fiber is present at a concentration of about 8.5 wt% and the pea cell wall fiber is present at a concentration of about 4 wt%. In one embodiment, the potato fiber is present at a concentration of about 8.5 wt% and the pea cell wall fiber is present at a concentration of about 3 wt%. In one embodiment, the potato fiber is present at a concentration of about 8.5 wt% and the pea cell wall fiber is present at a concentration of about 3 wt%. In one embodiment, the potato fiber is present at a concentration of about 8.5 wt% and the pea cell wall fiber is present at a concentration of about 6 wt%. In one embodiment, the potato fiber is present at a concentration of about 6 wt% and the pea cell wall fiber is present at a concentration of about 4.5 wt%. In one embodiment, the potato fiber is present at a concentration of about 7.5 wt% and the pea cell wall fiber is present at a concentration of about 5 wt%.

In one embodiment, the pea cell wall fiber is micronized pea cell wall fiber.

In one embodiment, the soluble polysaccharide fraction of the potato fiber comprises at least 20 wt% pectin.

In one embodiment, the non-animal protein is derived from nutritional yeast which is present in the composition at a final concentration ranging from 1 to 5 wt%, or at about 2 wt%, or at about 4 wt%.

In one embodiment, the protein content of the nutritional yeast is greater than 40 wt%, preferably greater than 50 wt%, preferably 40 to 90 wt%.

In one embodiment, the lipid is present in the composition at a concentration of at least 20 wt%, preferably between 20 to 40 wt%, preferably between 25 to 35 wt%.

In one embodiment, the lipid has a solid fat content greater than 15 wt% at 20°C, preferably greater than 30 wt% at 20°C.

In one embodiment the non-dairy cheese composition may comprise about 8.5 wt% potato fiber, about 4 wt% pea cell wall fiber, about 4 wt% nutritional yeast, and about 25 wt% shea sterin fraction.

In one embodiment the non-dairy cheese composition may comprise about 8.5 wt% potato fiber, about 4 wt% pea cell wall fiber, about 2 wt% nutritional yeast, about 25 wt% Shea sterin fraction, and about 2 wt% pea protein.

In one embodiment the non-dairy cheese composition may comprise about 8.5 wt% potato fiber, about 3 wt% pea cell wall fiber, about 2 wt% nutritional yeast, about 25 wt% Shea stearin fraction, and about 2 wt% soy protein.

In one embodiment the non-dairy cheese composition may comprise about 8.5 wt% potato fiber, about 6 wt% pea cell wall fiber, about 4 wt% nutritional yeast, and about 25 wt% coconut fat.

In one embodiment the non-dairy cheese composition may comprise about 6 wt% potato fiber, about 4.5 wt% pea cell wall fiber, about 4 wt% nutritional yeast, and about 25 wt% Coconut fat.

In one embodiment, the pea cell wall fiber is micronized pea cell wall fiber.

In one embodiment the non-dairy cheese composition may comprise about 7.5 wt% potato fiber, about 5 wt% pea cell wall fiber, about 4 wt% nutritional yeast, and about 25 wt% coconut fat.

In one embodiment, the non-dairy cheese composition may comprise the ingredients as shown in any one of recipes A to F in table 2.

The product characteristics such as hardness, chewiness and melting profile were analyzed. The texture of the product is improved over existing commercially available solutions.

The present invention also relates to a method of preparing a non-dairy cheese composition as described herein.

In one embodiment, the invention relates to a method of preparing a non-dairy cheese composition comprising the steps of mixing dietary fiber, calcium salt, lipids, and non-animal protein; emulsifying; heating until desired smooth, homogeneous texture is achieved; optionally molding the emulsion obtained into required shape; and cooling down.

In one embodiment, the invention relates to a method of preparing a non-dairy cheese composition comprising the steps of (i) Mixing dietary fiber, calcium salt, and non-animal protein; (ii) Adding water under shear until homogenous mixture is reached; (iii) Adding lipids to the above mixture and emulsifying under high shear; (iv) Heating the emulsion to a temperature ranging from 65 °C to 80°C, until desired smooth, homogeneous texture is achieved; (v) Optionally molding the emulsion obtained in step (iv) to required shape; and (vi) Cooling down.

In one embodiment the invention relates to a method of preparing a non-dairy cheese composition comprising the steps of (i) Mixing two or more different dietary fibers, flour, and non-animal protein; (ii) Adding water under shear until homogenous mixture is reached; (iii) Adding lipids to the above mixture and emulsifying under high shear; (iv) Heating the emulsion to a temperature ranging from 65 °C to 80°C, until desired smooth, homogeneous texture is achieved; (v) Optionally molding the emulsion obtained in step (iv) to required shape; and (vi) Cooling down.

In one embodiment, one of the dietary fibers is from a pea source, preferably pea cell wall fiber. In one embodiment, one of the dietary fibers is potato fiber.

In one embodiment, the two or more different dietary fibers comprise pea cell wall fiber and potato fiber.

The non-dairy cheese composition has a moisture content of more than 45 wt% and less than 60 wt%.

In one embodiment the present invention relates to a method of preparing the non-dairy cheese composition comprising the initial step of mixing potato fiber, pea cell wall fiber and nutritional yeast in presence of water such that the total wt% of fiber and nutritional yeast ranges from 10 to 25 wt%.

Lack of water makes the product very pasty and incorporation of oil is impossible. Similarly excess of water renders the composition not suitable for cheese formation. A further emulsifying step involves incorporation of coconut fat.

The invention also relates to use of a non-dairy cheese composition as described herein in a food product, for example in a salad bar product, lasagna, or a pizza.

### Examples

### Example 1: Viscoelastic properties of potato fibre

Potato fibre from commercially available sources were selected based on their rheological response when dispersed in water.

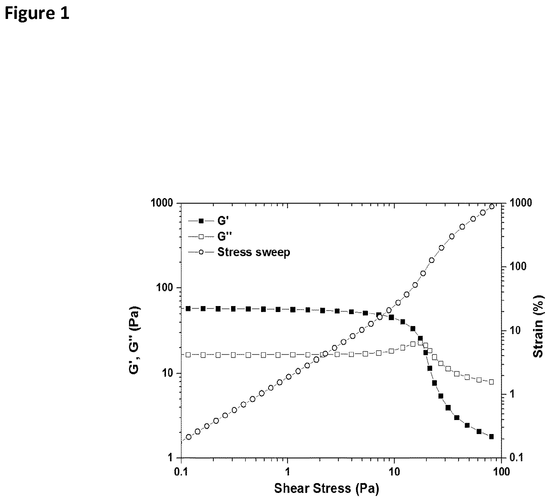

Figure 1 shows the viscoelastic properties of 5% wt. potato fibre water dispersions, with G' being significantly greater than G" and constant over wide range of applied strain (corresponding to the linear viscoelastic region) until the microstructure breaks down and the material yields. The fact that potato fibre dispersions show G' > G" indicates the dominant solid-like response over the applied strain ranges, which is attributed to the chain entanglement between the previously mentioned polysaccharides that are solubilized in the water-continuous phase. The insoluble fibre fraction of the potato fibre is acting as a filler, with less contribution to the viscoelastic response of the dietary fibre suspension

This particular viscoelastic response is not measured when dietary fibers with greater insoluble fraction (comprising primarily cellulose, hemicellulose, and lignin) are used at the same concentration. Those dietary fibres behave as particulate dispersions in which insoluble fibre particles have the tendency to sediment thereby displaying lower viscosity values and without any elastic contribution at equal concentration ranges. For these insoluble fibre rich ingredients, increased concentrations are needed for the particulate dispersions to exhibit solid-like behavior. This occurs when the suspensions are densely packed, with an effective phase volume greater than their maximum packing fraction, which leads to solid-like linear viscoelastic response that exhibits flows only if a sufficient shear stress is applied (i.e. the yield stress).

### Example 2: Shear viscometry of pea cell wall fibre and pea hull fibre

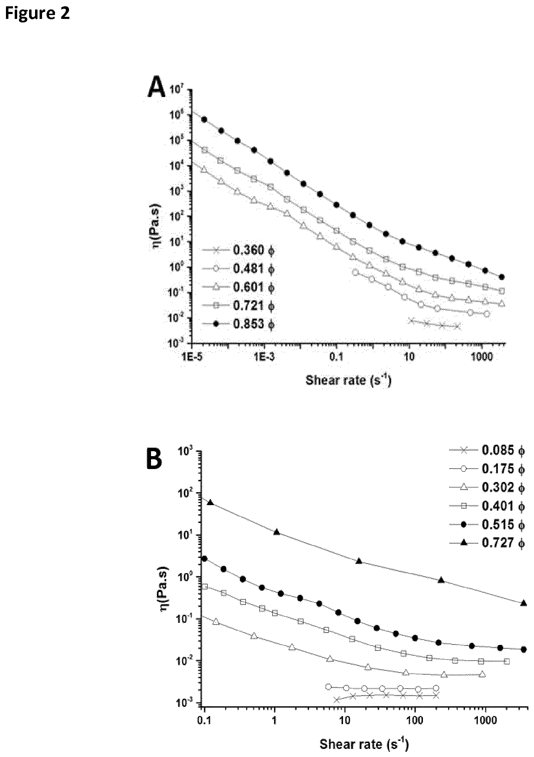

Figure 2A shows the shear viscosity for pea cell wall fibre at a range of volume fractions (ϕ). Pea fibre dispersions were prepared at a range of concentrations up to 7.5% wt. 2 ml of each FRPF dispersion was then transferred to an Eppendorf tube and centrifuged in 3 steps, 30 min each. At each step, the expelled water (E_{w}) was removed and weighted. The volume of the sediment (S) was calculated as S =V-E_{w}, where V corresponds to the total volume of 2 ml. Subsequently, the ϕ was calculated as described as follows: ϕ= S/V

Dispersions behave as Newtonian fluids at low ϕ while a shear thinning behavior becomes apparent at higher ϕ due to break up of particle aggregates under applied shear. The pea cell wall aqueous dispersions do not exhibit the limiting viscosities (η₀ and η∞) and have increased viscosity values similar, likely given by the relatively high starch content of the pea cell wall ingredient.

### Example 3: Non-dairy cheese compositions

Non-dairy cheese recipes A to F (expressed in % wt.) were prepared with varied composition at lab scale as outlined in Table 2. Total solid values shown in the table includes fiber, nutritional yeast, plant protein, lipids, calcium phosphate, table salt, flavour and colour.

**Table 2.**

| **Ingredients** | **Recipe A** | **Recipe B** | **Recipe C** | **Recipe D** | **Recipe E** | **Recipe F** |
|---|---|---|---|---|---|---|
| Potato Fibre | 8.5 | 8.5 | 8.5 | 8.5 | 6 | 7.5 |
| Pea Cell Wall Fibre micronized | 4 | 4 | 3 | 6 | 4.5 | 5 |
| Coconut fat | - | - | - | 25 | 25 | 25 |
| Shea stearin fraction | 25 | 25 | 25 | - | - | - |
| Nutritional yeast | 4 | 2 | 2 | 4 | 4 | 4 |
| Pea protein | - | 2 | - | - | - | - |
| Soy protein | - | - | 2 | - | - | - |
| Calcium Phosphate | 1 | 1 | 1 | 1 | 1 | 1 |
| Table salt | 1 | 1 | 1 | 1 | 1 | 1 |
| Vegan cheese flavor | 0.4 | 0.4 | 0.5 | 0.4 | 0.4 | 0.4 |
| Colouring agent | 1 | 1 | 1.2 | 1 | 1 | 1 |
| Water | 55.1 | 55.1 | 55.6 | 54.1 | 58.1 | 56.1 |
| Total Solids | 44.9 | 44.9 | 44.4 | 45.9 | 41.9 | 43.9 |

### Example 4: Production process of non-dairy cheese

A lab scale double-jacketed Stephan mixer equipped with a cutting blade was used to produce different non-dairy cheeses as outlined in Table 2. The different steps of the production process includes weighting and dry mixing of the powder ingredients, addition of water and mixing under high shear (sample T=20°C/t=5-10 min) in Stephan mixer.

Next, lipids mixed with coloring agent were added under high shear mixing (sample T=20°C/t=10-15 min). The samples were then heated (sample T=76°C, t=1-5 min) while mixing under high shear. Finally, the samples were hot molded and cooled until gel setting (T=4-10°C, preferably overnight). Figure 2 displays the produced non-dairy cheese (Recipe C) in sliced form.

### Example 5: Texture profile analyses of non-dairy cheese

A TA-HDi texture analyzer was used to measure the hardness characteristics of the non-dairy cheese compositions outline in Table 2. Non-dairy cheese samples were cut in a cylindrical shape of 3.5 cm diameter and hardness of the samples were measured via penetrometry at room temperature using a cylindrical probe of 4.15 mm diameter, speed of 1mm/sec and 5 mm penetration with a force threshold of 0.05N. Six replicate measurements were performed and the force of penetration at 5 mm were recorded.

**Table 3.**

| **Samples** | **Force at 3 mm** | |
|---|---|---|
| | **N** | **Std. dev.** |
| **Recipe A** | 0.71 | 0.1 |
| **Recipe B** | 0.90 | 0.06 |
| **Recipe C** | 1.03 | 0.24 |
| **Recipe D** | 1.32 | 0.20 |
| **Recipe E** | 0.71 | 0.1 |
| **Recipe F** | 0.90 | 0.06 |

## Claims

1. A non-dairy cheese composition comprising a combination of 2 or more different dietary fibers; non-animal protein, calcium salt, and lipid, wherein the composition is devoid of hydrocolloids and modified starches, and wherein the composition has a moisture content of more than 45 wt% and less than 60 wt%, and wherein one of the dietary fibers is pea cell wall fiber and the other dietary fiber is potato fiber.

2. The composition of claim 1, wherein the dietary fibre concentration is between 10 wt% to 18 wt%.

3. The composition of claims 1 and 2, wherein one of the dietary fibres of the combination comprises a starch content of between 35 wt% to 40 wt%.

4. The composition of claims 1 and 2, wherein one of the dietary fibers of the combination comprises a soluble polysaccharide fraction of between 35 wt% to 60 wt% of the total dietary fiber.

5. The composition of claims 1 to 4, wherein the pea cell wall fiber is present in the composition at a concentration of between 1 to 10 wt% and the potato fiber is present in the composition at a concentration of between 1 to 10 wt%.

6. The composition of claim 5, wherein the potato fiber at 5 wt. % in aqueous solution at 20°C exhibits the following viscoelastic properties 1) shear thinning behavior with zero shear rate viscosity above 8 Pa.s and 2) G' (storage modulus) greater than 65 Pa and G" (loss modulus) lower than 25Pa of at 1Hz frequency.

7. The composition of any one of the claims 1 to 6, wherein the non-animal protein is derived from nutritional yeast which is present at a final concentration ranging from 1 to 5 wt. %.

8. The composition of any one of the claim 7, wherein the protein content of the non-animal protein is between 40 to 90 wt%.

9. The composition of any one of the claims 1 to 8, wherein the lipid is present at a concentration of between 20 to 30 wt%, preferably about 25 wt%.

10. The composition of any one of the claims 1 to 9, wherein the lipid has a solid fat content greater than 15 wt% at 20°C, preferably greater than 30 wt% at 20°C and preferably less than 85 wt% at 20°C.

11. A method of preparing a non-dairy cheese composition according to claims 1 to 10 comprising the steps of:
(i) Mixing two or more different dietary fibers, calcium salt, and non-animal protein at room temperature;
(ii) Adding water under shear until homogenous mixture is reached;
(iii) Adding lipids to the above mixture and emulsifying under high shear;
(iv) Heating the emulsion to a temperature ranging from 65°C to 80°C, until desired smooth, homogeneous texture is achieved.
(v) Optionally molding the emulsion obtained in step (iv) to required shape; and
(vi) Cooling down.

## Patentansprüche

1. Milchfreie Käsezusammensetzung, umfassend eine Kombination aus 2 oder mehr verschiedenen Ballaststoffen, nicht-tierisches Protein, Calciumsalz und Lipid, wobei die Zusammensetzung frei von Hydrokolloiden und modifizierten Stärken ist, und wobei die Zusammensetzung einen Feuchtigkeitsgehalt von mehr als 45 Gew.-% und weniger als 60 Gew.-% aufweist, und wobei einer der Ballaststoffe Erbsenzellwandfaser ist und der andere Ballaststoff Kartoffelfaser ist sind.

2. Zusammensetzung nach Anspruch 1, wobei die Ballaststoffkonzentration zwischen 10 Gew.-% und 18 Gew.-% liegt.

3. Zusammensetzung nach den Ansprüchen 1 und 2, wobei einer der Ballaststoffe der Kombination einen Stärkegehalt zwischen 35 Gew.-% und 40 Gew.-% aufweist.

4. Zusammensetzung nach den Ansprüchen 1 und 2, wobei einer der Ballaststoffe der Kombination einen löslichen Polysaccharidanteil zwischen 35 Gew.-% und 60 Gew.-% des gesamten Ballaststoffgehalts umfasst.

5. Zusammensetzung nach den Ansprüchen 1 bis 4, wobei die Erbsenzellwandfaser in der Zusammensetzung in einer Konzentration zwischen 1 und 10 Gew.-% vorhanden ist und die Kartoffelfaser in der Zusammensetzung in einer Konzentration zwischen 1 und 10 Gew.-% vorhanden ist.

6. Zusammensetzung nach Anspruch 5, wobei die Kartoffelfaser bei 5 Gew.-% in wässriger Lösung bei 20 °C die folgenden viskoelastischen Eigenschaften vorweist: 1) scherverdünnendes Verhalten mit Null-Scherraten-Viskosität über 8 Pa.s und 2) G' (Speichermodul) größer als 65 Pa und G" (Verlustmodul) kleiner als 25 Pa bei 1 Hz Frequenz.

7. Zusammensetzung nach einem der Ansprüche 1 bis 6, wobei das nichttierische Protein aus Nährhefe gewonnen wird, die in einer Endkonzentration in einem Bereich von 1 bis 5 Gew.-% vorhanden ist.

8. Zusammensetzung nach einem der Ansprüche 7, wobei der Proteingehalt des nicht-tierischen Proteins zwischen 40 und 90 Gew.-% liegt.

9. Zusammensetzung nach einem der Ansprüche 1 bis 8, wobei das Lipid in einer Konzentration zwischen 20 und 30 Gew.-%, vorzugsweise etwa 25 Gew.-%, vorhanden ist.

10. Zusammensetzung nach einem der Ansprüche 1 bis 9, wobei das Lipid einen Festfettgehalt von mehr als 15 Gew.-% bei 20 °C, vorzugsweise mehr als 30 Gew.-% bei 20 °C und vorzugsweise weniger als 85 Gew.-% bei 20 °C aufweist.

11. Verfahren zum Herstellen einer milchfreien Käsezusammensetzung nach einem der Ansprüche 1 bis 10, umfassend die Schritte:
(i) Mischen von zwei oder mehr verschiedenen Ballaststoffen, Calciumsalz und nicht-tierischem Protein bei Raumtemperatur;
(ii) Zugeben von Wasser unter Scherung bis eine homogene Mischung erreicht ist;
(iii) Zugeben von Lipiden zu der oben genannten Mischung und Emulgieren unter hoher Scherung;
(iv) Erhitzen der Emulsion auf eine Temperatur in einem Bereich von 65 °C bis 80 °C, bis die gewünschte glatte, homogene Textur erreicht ist.
(v) optionales Formen der in Schritt (iv) erhaltenen Emulsion in die gewünschte Form; und
(vi) Abkühlen.

## Revendications

1. Composition de fromage non laitier comprenant une combinaison de deux fibres alimentaires différentes ou plus ; des protéines non animales, du sel de calcium et des lipides, dans laquelle la composition est dépourvue d'hydrocolloïdes et d'amidons modifiés, et dans laquelle la composition a une teneur en humidité supérieure à 45 % en poids et inférieure à 60 % en poids, et dans laquelle l'une des fibres alimentaires est une fibre de paroi cellulaire de pois et l'autre fibre alimentaire est une fibre de pomme de terre.

2. Composition selon la revendication 1, dans laquelle la concentration en fibres alimentaires est comprise entre 10 % en poids et 18 % en poids.

3. Composition selon les revendications 1 et 2, dans laquelle l'une des fibres alimentaires de la combinaison comprend une teneur en amidon comprise entre 35 % en poids et 40 % en poids.

4. Composition selon les revendications 1 et 2, dans laquelle l'une des fibres alimentaires de la combinaison comprend une fraction de polysaccharides solubles comprise entre 35 % en poids et 60 % en poids de la fibre alimentaire totale.

5. Composition selon les revendications 1 à 4, dans laquelle la fibre de paroi cellulaire de pois est présente dans la composition à une concentration comprise entre 1 et 10 % en poids et la fibre de pomme de terre est présente dans la composition à une concentration comprise entre 1 et 10 % en poids.

6. Composition selon la revendication 5, dans laquelle la fibre de pomme de terre à 5 % en poids dans une solution aqueuse à 20 °C présente les propriétés viscoélastiques suivantes 1) un comportement de fluidification par cisaillement avec une viscosité à taux de cisaillement nul supérieure à 8 Pa.s et 2) G' (module de stockage) supérieur à 65 Pa et G" (module de perte) inférieur à 25 Pa à une fréquence de 1 Hz.

7. Composition selon l'une quelconque des revendications 1 à 6, dans laquelle la protéine non animale est dérivée de la levure nutritionnelle qui est présente à une concentration finale allant de 1 à 5 % en poids.

8. Composition selon l'une quelconque des revendications 7, dans laquelle la teneur en protéines de la protéine non animale est comprise entre 40 et 90 % en poids.

9. Composition selon l'une quelconque des revendications 1 à 8, dans laquelle le lipide est présent à une concentration comprise entre 20 et 30 % en poids, de préférence environ 25 % en poids.

10. Composition selon l'une quelconque des revendications 1 à 9, dans laquelle le lipide a une teneur en matières grasses solides supérieure à 15 % en poids à 20 °C, de préférence supérieure à 30 % en poids à 20 °C et de préférence inférieure à 85 % en poids à 20 °C.

11. Procédé de préparation d'une composition de fromage non laitière selon les revendications 1 à 10, comprenant les étapes consistant à :
(i) mélanger deux fibres alimentaires différentes ou plus, du sel de calcium et des protéines non animales à température ambiante ;
(ii) ajouter de l'eau sous cisaillement jusqu'à obtention d'un mélange homogène ;
(iii) ajouter des lipides au mélange ci-dessus et émulsifier sous un cisaillement élevé ;
(iv) chauffer l'émulsion à une température comprise entre 65 °C et 80 °C, jusqu'à obtention de la texture lisse et homogène souhaitée.
(v) mouler éventuellement l'émulsion obtenue à l'étape (iv) pour lui donner la forme voulue ; et
(vi) refroidir.
